(19) Europäisches Patentamt
European Patent Office
Office européen des brevets

(11) Publication number: **0 032 991**
**A1**

(12) **EUROPEAN PATENT APPLICATION**

(21) Application number: **80107612.6**

(22) Date of filing: **04.12.80**

(51) Int. Cl.$^3$: **G 02 F 1/17**
C 09 K 9/02

(30) Priority: **28.12.79 US 107995**

(43) Date of publication of application:
**05.08.81 Bulletin 81/31**

(84) Designated Contracting States:
**DE FR GB**

(71) Applicant: **International Business Machines Corporation**

**Armonk, N.Y. 10504(US)**

(72) Inventor: **Engler, Edward Martin**
**21 Orchard Drive**
**Wappingers Fall New York 12590(US)**

(72) Inventor: **Kaufman, Frank Benjamin**
**762 Kitchawan Road**
**Ossining New York 10546(US)**

(72) Inventor: **Schroeder, Albert Henry**
**150 Overlook Avenue Apt. 5H**
**Peekskill New York 10566(US)**

(74) Representative: **Ekström, Gösta E.**
**IBM Svenska AB Box 962**
**S-181 09 Lidingö(SE)**

(54) **Reversible electrochromic display device.**

(57) Reversible electrochromic display device having a memory including a unit cell with working and counter electrode therein and means for applying an electric field across said electrodes and for reversing polarity. The electrochromic activity is derived from a doped polymeric resin having electrochromic active molecules covalently bonded thereto. The dopant is a non-electroactive ionic salt. It acts to increase switching speeds in potentiostatic writing modes.

EP 0 032 991 A1

Reversible electrochromic display device.

The invention relates to an improved reversible electrochromic display device. The device is characterized by having a polymer film with electrochromic active molecules bonded thereto and having incorporated therein a non-electroactive ionic salt as a dopant, coated on a viewing electrode.

The use of organic materials in electrochromic display devices has been encouraged because of their potential low cost, and low power requirements. However, the potential of these devices have not yet been realized.

A review of organic electrochromic devices can be found in the publication entitled "Nonemissive Electrooptic Displays," A. R. Kmetz and F. K. vonWillisen (Editors), Plenum Press, New York (1975). Two types of devices are described in the above-mentioned publication and for simplication are classified hereinafter as Class I and Class II.

The simpliest approach to these would be optimal devices in the Class I configuration. In these devices a thin layer electrochemical cell with optically transparent electrodes is filled with a solvent supporting electrolyte and an uncolored organic donor/acceptor pair of molecules. These molecules can be reversibly made to form

a highly colored oxidant and a reductant at the respective electrode surfaces. Color develops in these cells when a voltage is applied at a particular point on the electrodes to form the colored oxidized and reduced pair. Development of color depends on and is limited by, diffusion of the electroactive organic molecules to the electrode surface. The intensity of color is dependent upon and is limited by the molecules' extinction coefficient and the solubility in the electrolyte solution. Examples of this class of devices are exhibited in U.S. Pat. No. 3,451,741 and in U.S. Pat. No. 4,093,358 issued June 6, 1978. In the former reference the organic materials used are hydroxyaryl imidazole compounds and in the latter reference, pyrazoline compoundes are used. The latter reference discloses that the use of pyrazonline type compounds gives increased efficiencies.

In these Class I devices, after diffusional formation of the colored ions at the respective electrode surface occurs, the colored oxidant and reductant diffuses into the bulk solution in the center of the cell. The colored oppositely charged ions which are formed at the

electrode surfaces, annihilate each other via electron transfer to reform the uncolored neutral species. Therefore the image persists until this diffusional annihilation occurs. To maintain the desired image requires a "refresh" process whereby voltage pulses are applied at the desired point on the electrode surfaces to maintain the neutral-ionic-neutral species creation-annihilation cycle.

The major disadvantage of Class I devices is that they require a diffusional process in an all solution environment. Because of this process constant cycling is required for memory in the display. Additionally, constant recycle leads to device degradation due to uncontrolled side reactions, sensitivity to solvent contaminants and impurities. Furthermore, the constant recycle program requires energy and does not allow real storage of the displayed information.

The Class II devices partially solves some of the problems ascribed to the Class I devices mentioned above. In these devices, after electron transfer at the electrode surface diffusion into the bulk solution is prevented by the production of a colored, ion-radical salt on the electrode surface. Typical of Class II devices are thoese disclosed in U. S. Patent No. 3,806,229. The electroactive species used in these devices are viologen acceptors. These devices have the beneficial property of memory, however, they

still involve a diffusional process to form the colored state. Furthermore, reproducible formation of the solid phase on the electrode surface and reproducible removal of this solid phase by voltage reversal result in poor lifetimes for the devices. A detailed discussion of these devices is found in the publication to K. Belinko, Appl. Phys. Letters, 29 p. 363 (1976).

More recently in U. S. Pat. No. 4,142,783, assigned to a common assignee, there is taught a novel reversible electrochromic display device. The device is characterized by having a layer of porous polymeric resin or support to which an electrochromic active molecule is bonded, coated on a viewing vehicle.

A major drawback associated with the use of polymer films, in general, in electrochromic displays has been their highly insulating behavior. The low ionic conductivity of these films results in two undesirable properties; switching speeds are very low in potentiostatic write modes due to low ionic mobilities and to very large uncompensated resistance effects within the film; and constant current writing results in catastrophic failure of the film at all but the lowest current densities.

The invention as claimed is intended to remedy the above mentioned drawbacks. It solves the problem by using a polymer film with electroactive molecules

covalently bonded thereto and having incorporated therein a non-electroactive ionic salt as a dopant, coated on a viewing electrode.

The advantages offered by the invention are mainly improved switching speeds and stability under constant current writing conditions.

The invention, which is defined in the attached claims, is described in detail below with reference to the drawings, in which:

FIG. 1 shows the potentiostatic write and erase pulses for 5000Å films, prepared with and without a non-electroactive ionic salt dopant of the present invention.

FIG: 2 depicts the potential transient accompanying a constant current write pulse of mA in films prepared with (solid line) and without (dotted line) a dopant of the present invention.

According to the present invention, there is provided an improved electrochromic display device which features a polymeric material film comprising electrochromic active species bonded to a polymer and a dopant incorporated therein. The present invention has all the advantages attendant in the device disclosed in U. S. Pat. No. 4,142,783.

In the present invention, as in U. S. Pat. No. 4,142,783 the electrochromic coloration reaction

can take place due to the giving up or donation of an electron by an electrochromic active donor compound to the viewing electrode. It should be noted that while the invention is described using donor molecules acceptor electrochromic active species can similarly be utilized.

The donor molecules that can be used in this invention are those which can be characterized as having the following specific molecular properties:

(a) Those that are capable of reversible electron oxidation to a stable radical cation, where the cation absorbs visible light differently from the neutral species;

(b) have an oxidation potential of from about 0.1V to about 1V measured against a standard calomel electrode (SCE); and

(c) must have a functional group which when reacted with a porous polymer support will be bonded thereto. Functional groups contemplated by the present invention include hydroxyl, carboxyl, amino groups and the like.

The acceptor molecules that can be used in this invention are those which can be characterized

as having the following specific molecular properties;

(a) Those that are capable of reversible electron reduction to stable radical anion where the anion absorbs visible light differently from the neutral species;

(b) have a reduction potential of from about 0.1V to about 1V measured against standard calomel electrode; and

(c) must have a functional group which when reacted with a porous polymer support will be bonded thereto. Functional groups contemplated by the present invention include hydroxyl, carboxyl, amino groups and the like.

Typical electroactive acceptor materials which may be used include p-tetracyanoquinodimethide (TCNQ), p-benzoquinone and bis(dithiolene) nickel. Specifically the preferred acceptors can be selected from hydroxyethyl-p-tetracyanoquinodimethane, hydroxyphenyl-p-benzoquinone and carboxy bis(dithiolene) nickel.

Specifically the electrochromic active donor species can be selected from a wide variety of compounds. For the purposes of the present invention triaryl pyrazolines having hydroxyl, carboxyl or amino groups on the phenyl ring at the 1, 3 or 5 positions can be used, e.g.,

1, 3-di-(p-methoxyphenyl)-5-(p-hydroxyphenyl)-$\Delta^2$-pyrazoline,
1, 5-di-(p-methoxyphenyl)-3-(p-hydroxyphenyl)-$\Delta^2$-pyrazoline,
3, 5-di-(p-methoxyphenyl)-1-(p-hydroxyphenyl)-$\Delta^2$-pyrazoline,
1, 3-di-(p-methoxyphenyl)-5-(p-carboxyphenyl)-$\Delta^2$-pyrazoline,
1, 5-di-(p-methoxyphenyl)-3-(p-carboxyphenyl)-$\Delta^2$-pyrazoline,
3, 5-di-(p-methoxyphenyl)-1-(p-carboxyphenyl)-$\Delta^2$-pyrazoline,
1, 3-di-(p-methoxyphenyl)-5-(p-aminophenyl)-$\Delta^2$-pyrazoline,
1, 5-di(phenyl)-3-(p-aminophenyl)-$\Delta^2$-pyrazoline,
1-(p-hydroxyphenyl)-3-(p-methoxystyryl)-5-(p-methoxyphenyl)-$\Delta^2$-pyrazoline,
1, 3-di-(phenyl)-5-(p-hydroxyphenyl)-$\Delta^2$-pyrazoline,
1, 3-di-(phenyl)-5-(p-carboxyphenyl)-$\Delta^2$-pyrazoline,
1, 3-di-(phenyl)-5-(p-aminophenyl)-$\Delta^2$-pyrazoline,
1, (p-methoxyphenyl)-3-(morpholino)-5-p-hydroxyphenyl-$\Delta^2$-pyrazoline,
1, (p-methoxyphenyl)-3-(morpholino)-5-p-carboxyphenyl-$\Delta^2$-pyrazoline,
1, (p-methoxyphenyl)-3-(morpholino)-5-p-aminophenyl-$\Delta^2$-pyrazoline,

1-(p-hydroxyphenyl)-3-(p-diethylaminostryl)-5-(p-diethylaminophenyl)-$\Delta^2$-pyrazoline, tetrathiafulvalene (TTF), its derivatives and Se analogs (TSeF) and its derivatives. For example, tetrathiafulvalenecarboxylic acid ($TTFCO_2H$), tetraselenafulvalenecarboxylic, (hydroxymethyl)-tetrathiafulvalene

($TTFCH_2OH$), (hydroxymethyl)-tetraselenafulvalene ($TSeFCH_2OH$), (p-hydroxyphenyl)-tetrathiafulvalene ($TTFC_6H_4OH$), (p-hydroxyphenyl)-tetraselenafulvalene ($TSeFC_6H_4OH$), (p-aminophenyl)-tetrathiafulvalene ($TTFC_6H_4NH_2$), (p-carboxyphenyl)-tetrathiafulvalene ($TTFC_6H_4CO_2H$).

The above compounds are described for purposes of demonstrating the inventors use. It would be obvious to others to use similar compounds meeting the requirements set forth above.

The porous polymeric resin may be a homopolymer or copolymer having skeletal functional groups or side chains having functional groups capable of reacting with the functional groups of the electrochromic active molecules thereby binding said molecules thereto. The polymer resin can be linear or cross-linked with an appropriate disubstituted monomer to provide a porous insoluble matrix. The amount of crosslinking monomer added during polymerization controls the degree of porosity of the resins. A specific polymeric resin which may be used among others, is a copolymer of styrene and chloromethylated styrene, e.g.

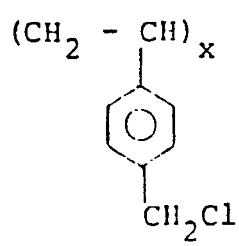
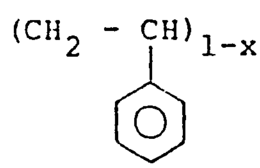

When this polymeric material is used the value of x can be varied to effect the intensity of the colors formed by the electrochromic active molecule. For example, when $x \sim 1$ a large number of molecules are attached to the base polymer resin and are in close proximity to one another thus providing high intensity color when a voltage is applied across the cell. Conversely when $x < 1$ only a small number of molecules are attached and are widely dispersed, thereby providing low intensity color. Typically, the polymer is either linear, or crosslinked with divinyl benzene from about 0.25% to about 10%.

The synthesis of the above compositions are given in U. S. Pat. No. 4,142,783 and are incorporated herein by reference.

As is known to the prior art, the electrochromic reaction requires an electrolyte that is soluble in an appropriate solvent. Typical electrolytes that can be used in the present invention are

tetrabutylammonium perchlorate ($Bu_4NClO_4$),
perchloric acid ($HClO_4$),
sodium fluoroborate ($NaBF_4$),
sodium perchlorate ($NaClO_4$),
sodium hexafluorophosphate ($NaPF_6$),
tetraethylammonium fluoroborate ($Et_4NBF_4$),
tetraethylammonium hexafluorophosphate ($Et_4NPF_6$) and
tetraethylammonium perchlorate ($Et_4NClO_4$).

The solvents which can be used can be protic or aprotic solvents which are polar or non polar. One limiting factor is the solubility of the electrolyte.

Typical useful solvents include methyl ethyl ketone, methylene chloride, ethanol, dimethylformamide, dimethylsulfoxide, N,N-dimethylacetomide tetrahydrofuran and acetonitrile.

The device comprises a cell having at least two electrodes i.e., a working, and a counter electrode. A reference electrode can also be included. The electrodes may be isolated from each other by means of a membrane, such as a porous frit. The working electrode or the electrode on which the electrochromic effect will be produced can be a conductive metal plate e.g., Pt, Au and Cu foils, an optically transparent conductor such as $SnO_2$, $InO_2$, or a conductive film e.g., Pt, Au or mini-grid electrodes. The polymeric resin material having electrochromic active molecules attached thereto is coated on the working electrode to produce an electrochromic effect when an electric field is applied across the electrodes. The reference electrode can be the standard calomel cell or other prior art standard electrodes and the counter electrode can be a Pt wire.

The coating of the polymer resins can be performed in the following fashion. The crosslinked resin with bound electroactive species is swelled in

benzene or methylene chloride. This suspension is deposited dropwise onto a transparent electrode. The solvent is allowed to slowly evaporate to give a fairly uniform polymer film with good adhesion characteristics.

The linear resin is dissolved in tetrahydrofuran, methylene chloride or cyclopentanone and dropped onto a spinning (~3000 RPM) transparent electrode. The resulting spin cast film is very uniform and defect-free with excellent adhesion characteristics.

The non-electroactive dopants used in the present invention are of two general types: (1) monomeric dopants which leach out into the electrolyte solution and (2) polymer-bound ionic dopants (polyelectrolytes), which remain within the film. The former function by lowering the polymer density via leaching into the electrolyte solution, thus allowing greater penetration by solvent and greatly enhanced ionic conductivity. The latter function by promoting solvent swelling due to the increased polarity provided by the polymer-bound ionic groups, again, increasing the ionic conductivity.

The monomeric dopants would include those materials having the following characteristics.

1. Solubility in the casting solvent.
2. Solubility in the electrolyte solution.

3. No interfering electrochemical reactions.
4. No interfering chemical reactions with the polymer-bound electroactive species.
5. They have moderate size so that leaching into the electrolyte solution may occur.

These dopants can be neutral molecules or ionic salts. Typical monomeric dopants are selected from:

tetrabutylammonium perchlorate (TBAP),
tetrahexylammonium perchlorate (THAP),
Variamine Blue B,
and tetracylanoquinodiamethane (TCNQ)

In practice the monomeric dopant is added to a polymer solution and the solution is spin coated on a viewing substrate. Typical doping levels which produce the desired characteristics are from about 5% to about 50% by weight (dopant: polymer).

The polyelectrolyte dopants would include those materials having the following characteristics:

1. Solubility in the casting solvent.
2. No interfering electrochemical reaction.
3. No interfering chemical reactions with the polymer-bound electroactive species.

These dopants can be incorporated into the spinning solution, as described above for the monomeric

dopants, or they can be formed in situ in the film by chemical reaction, in which case the following characteristic must also be exhibited:

4. The polymer-bound electroactive species must be stable under the reaction conditions for formation of the polymer-bound ionic dopant.

Polyelectrolytes found suitable for the invention include:

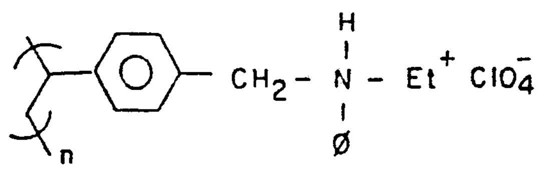

Polyvinylbenzyl ethyl phenyl ammonium perchlorate

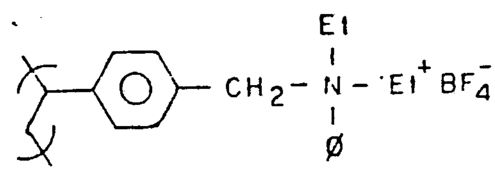

Polyvinylbenzyl diethyl phenyl ammonium tetrafluoroborate

Suitable chemical reactions for in situ formation of these polyelectrolyte dopants include:

Protonation of tertiary amine groups by acids including: $HClO_4$

Alkylation of tertiary amine groups by reagents including: $Et_3OBF_4$

The coated substrate or working electrode is placed in a cell having reference and counter

electrodes. It is filled with an electrolyte of the type listed above. A voltage of about 1-2 volts from dc power source is applied across the electrodes causing a color change in the polymer films.

The foregoing and other objects, features and advantages of the invention will be apparent from the following more particular description of preferred embodiments of the invention.

EXAMPLES

The following examples are given solely for purposes of illustrations and are not to be considered limitations on the inventions, many variations of which are possible without departing from the spirit or scope thereof.

Example 1

A cell having working reference and counter electrodes therein was filled with a solution of tetraethyl ammonium 0.1M perchlorate in acetonitrile as the electrolyte. The working electrode was coated with a 0.5 micron thick film of a polyvinylbenzl-phenoxytetrathiafulvalene copolymer bonded thereto. The coating solution was comprised of the copolymer in tetrahydrofuran to which was added TBAP in the amount of 50% by weight of the polymeric material.

A green coloration of the film was produced by potentiostatically applying a voltage of + 0.65 V vs. SCE to the working electrode. FIG. 1 compares the current transients accompanying this potential pulse for the doped film (solid line) and a film prepared without the dopant (dotted line). The effect of doping on the write pulse is substantial, i.e. the time required for the writing process is decreased by a factor of more than ten.

The green coloration was also produced by applying a constant current of 1 mA across the cell.

The dotted line in FIG. 2 depicts the potential transient accompanying a constant current write pulse of 1mA in the film prepared without the TBAP dopant. The sharp increase in voltage corresponds to a failure mode of the film. It was demonstrated that within a very few pulse cycles the film activity was lost. By contrast the potential in the TBAP doped film, represented by the solid line, is well-behaved throughout the entire current pulse and the failure mode is avoided.

Example 2

A cell as in Example 1 was prepared except the working electrode was coated from a solution of polyvinyl benzyl phenoxy tetrathiafulvalene in tetrahydrofuran to which was added about 30% by weight of TCNQ. The cell was operated in the

same manner as in Example 1. The results obtained were similar to those disclosed in Example 1.

Example 3

A cell as in Example 1 was prepared except that the working electrode was coated from a solution of polyvinyl benzyl phenoxy tetrathiafulvalene in tetrahydrofuran to which was added about 50% by weight of variamine Blue B. The cell was operated in the same manner as in Example 1. The results obtained were similar to those disclosed in Example 1.

Example 4

A cell as in Example 1 and the same procedure was used except that a coating solution containing

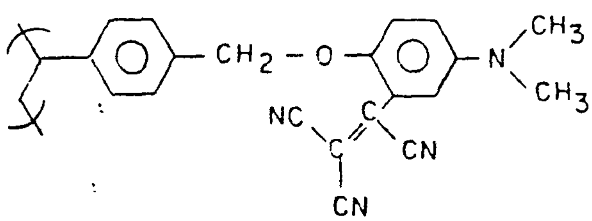

(polyvinylbenzyl(2-tricyano vinyl,5-dimethyl amino phenyl(ether))

to which was added 50% by weight TBAP was used. Similar results were obtained.

Example 5

A cell as in Example 1 and the same procedure

was used except that the working electrode was coated using a solution containing 2 parts by weight of polyvinylbenzyl(ethylphenylamine). The film was then treated with a solution of triethyloxionium fluoroborate in ether for five minutes to quarternize the amine groups. Similar results were obtained with this in-situ-produced polyelectrolyte doped film as in the Examples above.

Claims:

1. Reversible electrochromic display device having memory including an unit cell with working and counter electrodes therein, means for applying an electric field across said electrodes and for reversing polarity, a solution of an electrolyte for the transport of electrons from said working electrode to said counter electrode, characterized by a layer of polymer resin coated on said working electrode, said resin having electroactive molecules covalently bonded thereto and a non-electroactive dopant incorporated therein.

2. Device as claimed in claim 1, wherein said non-electroactive dopant is selected from the group consisting of tetrabutylammonium perchlorate (TBAP), tetrahexylammonium perchlorate (THAP), tetracylanoquinodiamethane (TCNQ) and Variamine Blue B.

3. Device as claimed in claim 2, wherein said electroactive molecules are selected from the group consisting of pyrazoline derivatives, tetrathiafulvalene (TTF) and its deriratives, SE analogs (TSeF) and its derivatives, p-tetracyanoquinomethane, nickel bis(dithiolene) and benzoquinone.

4. Device as claimed in claim 3, wherein said resin having said electroactive molecule

bonded thereto is polyvinylbenzylphenoxy tetrathiafulvalene and said non-electroactive dopant is TBAP.

5. Device as claimed in claim 4 wherein said resin having said electroactive molecule bonded thereto is polyvinylbenzylphenoxy tetrathiafulvalene and said non-electroactive ionic salt is THAP.

6. Device as claimed in claim 4 wherein said resin having said electroactive molecule bonded thereto is polyvinylbenzylphenoxy tetrathiafulvalene and said non-electroactive salt is TCNQ.

7. Device as claimed in claim 4, wherein said resin having said electroactive molecule bonded thereto is polyvinylbenzylphenoxy tetrathiafulvalene and said non-electroactive salt is Variamine Blue B.

8. Device as claimed in claim 3 wherein said resin having said electroactive molecule bonded thereto is polyvinylbenzyl-carboxytetrathiafulvalene.

9. Device as claimed in claim 8, wherein said resin having said electroactive molecule bonded thereto is

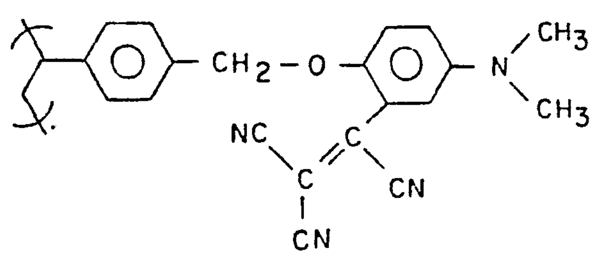

10. Device as claimed in claim 3, wherein said non-electroactive dopant is

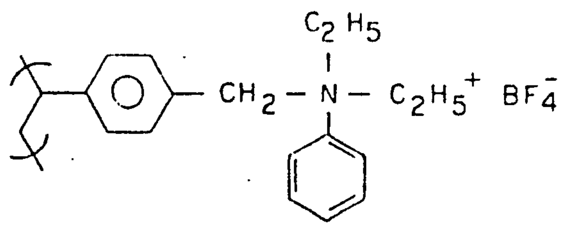

FIG. 1

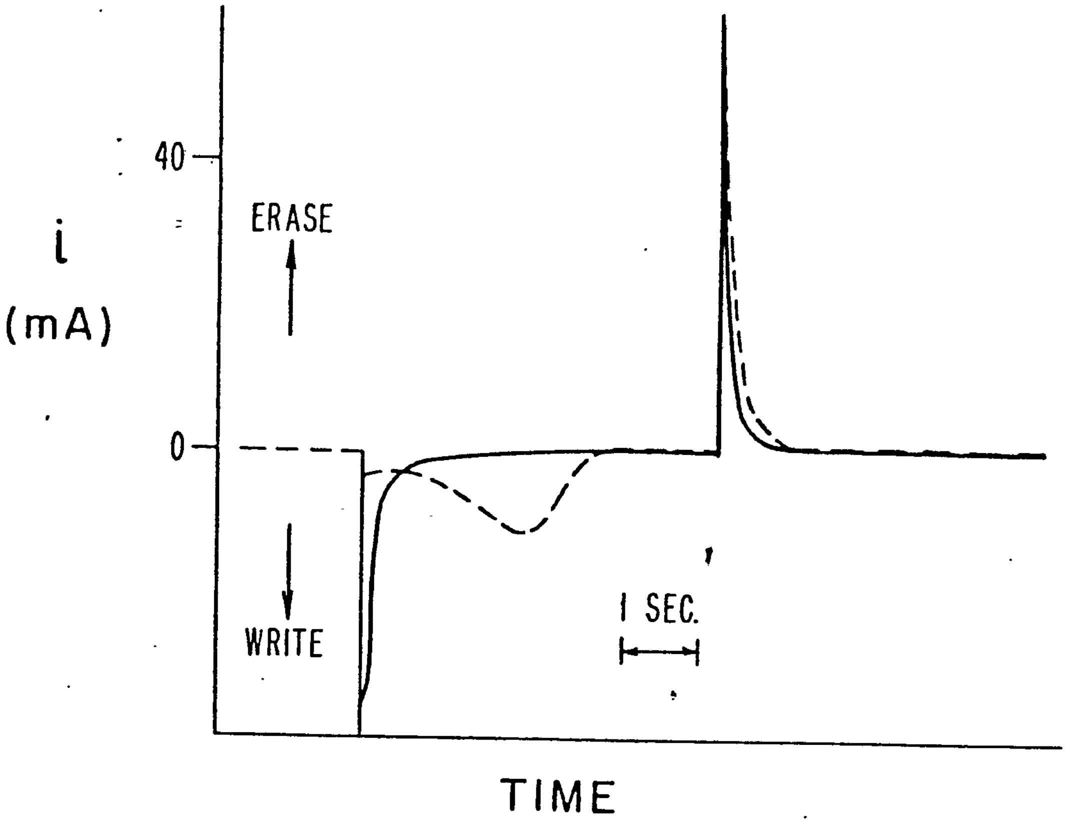


FIG. 2

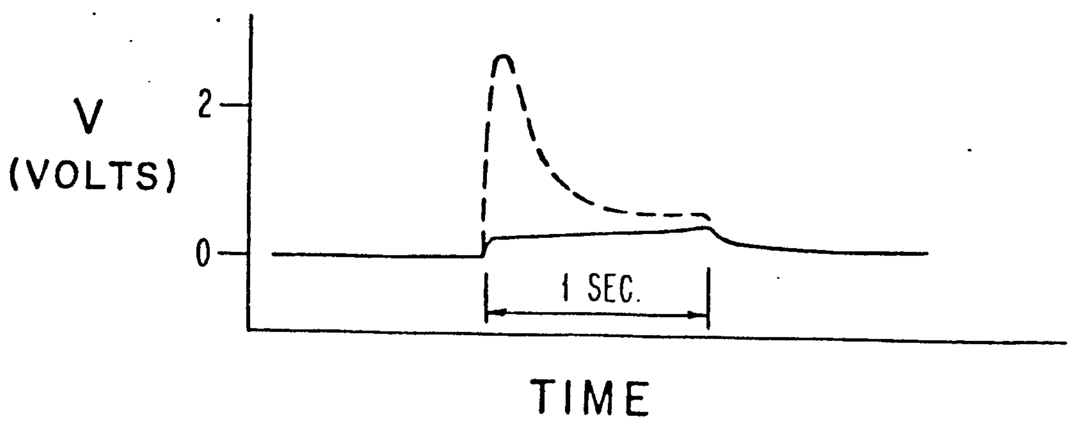

0032991

European Patent Office

# EUROPEAN SEARCH REPORT

Application number
EP 80 10 7612

| Category | Citation of document with indication, where appropriate, of relevant passages | Relevant to claim | CLASSIFICATION OF THE APPLICATION (Int. Cl.3) |
|---|---|---|---|
| D | FR - A - 2 393 388 (I.B.M. CORP.)<br>* Claims 1-5; page 8, lines 15-26; page 12, examples 2,3,5-8 *<br>& US - A - 4 142 783<br>-- | 1-4 | G 02 F 1/17<br>C 09 K 9/02 |
| | IBM TECHNICAL DISCLOSURE BULLETIN, vol. 22, no. 7, December 1979, pages 2993-2997<br>New York, U.S.A.<br>E.M. ENGLER et al.: "Electrochromic display device with memory based on homogeneous donor polymer films"<br>* Page 2993, second-last paragraph; page 2994, penultimate paragraph - last paragraph; pages 2996-2997 *<br>-- | 1-4 | TECHNICAL FIELDS SEARCHED (Int. Cl.3)<br>G 02 F 1/17<br>C 09 K 9/02 |
| | IBM TECHNICAL DISCLOSURE BULLETIN, vol. 21, no. 8, January 1979, pages 3409-3412<br>New York, U.S.A.<br>E.M. ENGLER et al.: "Light addressable electrochromic display"<br>* Page 3409, paragraphs 3,4; page 3410, last paragraph; page 3411, paragraph 3 *<br>-- | 1-3 | CATEGORY OF CITED DOCUMENTS<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| | IBM TECHNICAL DISCLOSURE BULLETIN, vol. 20, no. 5, October 1977, pages 2001-2004<br>New York, U.S.A.<br>F.B. KAUFMAN et al.: "Ion-paired triaryl pyrazolines; means for controlling charge transport in pyrazoline glasses and polymers"<br>./. | 1-3 | &: member of the same patent family, corresponding document |

The present search report has been drawn up for all claims

| Place of search | Date of completion of the search | Examiner |
|---|---|---|
| The Hague | 31-03-1981 | DECANNIERE |

European Patent Office

# EUROPEAN SEARCH REPORT

Application number EP 80 10 7612
-2-

| Category | DOCUMENTS CONSIDERED TO BE RELEVANT<br>Citation of document with indication, where appropriate, of relevant passages | Relevant to claim | CLASSIFICATION OF THE APPLICATION (Int. Cl.3) |
|---|---|---|---|
| | * Page 2001, paragraph 1; page 2002, paragraph 3 *<br>-- | | |
| | FR - A - 2 388 359 (I.B.M. CORP.)<br>* Claims 1,6,10,11 *<br>& US - A - 4 167 309<br>-- | 1 | |
| | REACTIONS OF ORGANOSULFUR COMPOUNDS, Eric Block, 1978, pages 236-240, Academic Press New York, U.S.A.<br>ERIC BLOCK: ""Dimerization": Tetrathiofulvenes"<br>* Page 237, second part *<br>-- | 1-3 | TECHNICAL FIELDS SEARCHED (Int. Cl.3) |
| | JOURNAL OF THE AMERICAN CHEMICAL SOCIETY, vol. 94, no. 2, 26th January 1972, pages 670-672 New York, U.S.A.<br>F. WUDL et al.: "Electrical conductivity by the Bis-1,3-dithiole-Bis-1,3-dithiolium system"<br>* Page 670, formules 1,2; page 671, right-hand column, last paragraph *<br>-- | 1,3,5-8 | |
| | US - A - 4 037 928 (R.B. CHAMP et al.)<br>* Claims 1,6,7,8; column 3, lines 16-20; column 4, lines 1-7 *<br>-- | 1,3 | |
| A | IBM TECHNICAL DISCLOSURE BULLETIN, vol. 18, no. 11, April 1976, pages 3863-3864 ./. | 1 | |

European Patent Office

# EUROPEAN SEARCH REPORT

Application number
EP 80 10 7612


| Category | DOCUMENTS CONSIDERED TO BE RELEVANT<br>Citation of document with indication, where appropriate, of relevant passages | Relevant to claim | CLASSIFICATION OF THE APPLICATION (Int. Cl.3) |
|---|---|---|---|
| | New York, U.S.A.<br>J.J. CUOMO et al.: "Membrane electrochromic display employing porous fibrous electrode"<br>* Page 3864, paragraph 2 *<br>-- | | |
| A | IBM TECHNICAL DISCLOSURE BULLETIN, vol. 19, no. 10, March 1977, page 3879<br>New York, U.S.A.<br>L.D. BOWDEN et al.: "Electrode for electrochromic display"<br>* Page 3879, paragraph 2 *<br>-- | 1 | TECHNICAL FIELDS SEARCHED (Int. Cl.3) |
| A | DE - A - 2 802 728 (SHARP K.K.)<br>* Claims 1,3,10; page 14, paragraph 2 *<br>-- | 1 | |
| A | DE - A - 2 504 905 (BBC A.G.)<br>* Claims 1,6 *<br>& US - A - 4 066 336<br>-- | 1 | |
| A | DE - A - 2 433 044 (BBC A.G.)<br>* Claims 1,10,11 *<br>& US - A - 3 971 624<br>-- | 1 | |
| A | GB - A - 2 021 277 (A. VLADIMIROVICH et al.)<br>* Claim 1 *<br>-- | 1 | |
| A | IBM TECHNICAL DISCLOSURE BULLETIN, vol. 20, no. 3, August 1977, page 1226<br>./. | 1-3 | |

European Patent Office

# EUROPEAN SEARCH REPORT

Application number
EP 80 10 7612
-4-

| Category | Citation of document with indication, where appropriate, of relevant passages | Relevant to claim | CLASSIFICATION OF THE APPLICATION (Int. Cl.3) |
|---|---|---|---|
| | New York, U.S.A.<br>D.C. GREEN et al.: "Heterofulvalene-halide organic electrochromic display with memory"<br>* Page 1226, paragraph 2 *<br>-- | | |
| A | IBM TECHNICAL DISCLOSURE BULLETIN, vol. 21, no. 5, October 1978, pages 2084-2085<br>New York, U.S.A.<br>E.M. ENGLER et al.: "Tetrathiafulvalene derivatives as electrochromic systems for display applications"<br>* Page 2084, paragraph 2 *<br>-- | 1,3 | TECHNICAL FIELDS SEARCHED (Int. Cl.3) |
| P | APPLIED PHYSICS LETTERS, vol. 36, no. 6, 15th March 1980, pages 422-425<br>New York, U.S.A.<br>F.B. KAUFMAN et al.: "Polymer-modified electrodes: a new class of electrochromic materials"<br>* Page 422, right-hand column; page 424, right-hand column, formulas *<br>-- | 1-3,5,8 | |
| A | US - A - 4 036 648 (E.M. ENGLER)<br>* Claims 1,3,4; column 1, lines 18-36; column 2, lines 17-19 *<br>---- | 1-3 | |